# EUROPEAN PATENT APPLICATION

(11) **EP 3 809 557 A1**
(43) Date of publication of application: **21.04.2021**
(21) Application number: 19203202.7
(22) Date of filing: 15.10.2019
(51) Int. Cl.: H02J 9/06, H02J 9/02, H05B 45/385, H05B 47/18

(54) **BI-DIRECTIONAL EMERGENCY LIGHTING DEVICE**

(71) Applicant: Tridonic GmbH & Co. KG, 6851 Dornbirn (AT)
(72) Inventor: Szyler, Blazej, 6850 Dornbirn (AT)
(74) Representative: Rupp, Christian

(57) **Abstract**

An emergency lighting driver (1) is provided. The emergency lighting driver (1) comprises a bi-directional flyback converter (2), comprising a primary side (21) and a secondary side (22). Moreover, the emergency lighting driver (1) comprises an integrated DALI power supply (9). The bi-directional flyback converter (2) is adapted to, in a non-emergency state, provide energy from the primary side (21) to the secondary side (22), and in an emergency state, provide energy from the secondary side (22) to the integrated DALI power supply (9) connected to the primary side (21).

## Description

The invention relates to an emergency lighting device, especially a DALI-bus compatible emergency lighting device.

In conventional emergency lighting drivers, in a non-emergency state, AC mains current is converted to DC current for operating for example LED lights. In an emergency state, stored battery power is used for operating the same or different lights. Such a system is for example shown in WO 2019/166328 A1.

In DALI compatible lighting systems though, in such an emergency state, a DALI bus power supply provided as a separate device from the emergency lighting driver is powerless. This leads to the situation that a communication through the DALI bus is no longer possible.

Accordingly, the object of the invention is to provide an emergency lighting driver, which allows for a communication over the DALI bus during emergency states.

The object is solved by the features of the independent claim. Additional features of the invention are provided in the dependent claims. In the following, parts of the description and drawings referring to embodiments which are not covered by the claims are not presented as embodiments of the invention, but as examples useful for understanding the invention.

According to a first aspect of the invention, an emergency lighting driver is provided. The emergency lighting driver comprises a bi-directional flyback converter, comprising a primary side and a secondary side. Moreover, the emergency lighting driver comprises an integrated DALI power supply. The bi-directional flyback converter is adapted to, in a non-emergency state, provide energy from the primary side to the secondary side, and in an emergency state, provide energy from the secondary side to the integrated DALI power supply connected to the primary side. This allows for a supply of operating voltage to the DALI bus even in emergency states.

Preferably, an emergency state is defined by a loss of mains power, wherein a non-emergency state is defined by an availability of mains power. This allows for a clear differentiation between an emergency state and a non-emergency state.

Advantageously, the bi-directional flyback converter comprises a transformer, comprising on the secondary side, a secondary side winding and an auxiliary secondary side winding connected in series to the secondary side winding. The secondary side of the bi-directional flyback converter moreover comprises an auxiliary secondary side winding flyback switch, connected between the auxiliary secondary side winding and ground, and an auxiliary secondary side winding bypass switch, connected between ground and a connection node between the secondary side winding and the auxiliary secondary side winding. This allows for an integration and a bypassing of the auxiliary secondary side winding.

Preferably, in the non-emergency state, the emergency lighting driver is adapted to open the auxiliary secondary side winding flyback switch and close the auxiliary secondary side winding bypass switch. Additionally or alternatively, in the emergency state, the emergency lighting driver is adapted to switch the auxiliary secondary side winding flyback switch repeatedly in a flyback operation, and open the auxiliary secondary side winding bypass switch. This clearly bypasses the auxiliary secondary side winding during non-emergency operation and clearly integrates the auxiliary secondary side winding in the emergency state.

Preferably, the transformer comprises on the primary side an auxiliary primary side winding, connected to the integrated DALI power supply. In the emergency state, the emergency lighting driver is adapted to transfer energy from the auxiliary secondary side winding to the auxiliary primary side winding. This allows for a bi-directional operation of the converter.

Advantageously, the emergency lighting driver additionally comprises a battery switch connected to the secondary side, which is connectable to a battery. The emergency lighting driver is adapted to, in the emergency state, close the battery switch, directly connecting the battery to the secondary side, and in the non-emergency state, open the battery switch, opening the direct connection of the battery to the secondary side. This allows for a direct powering of the secondary side of the bi-directional flyback converter by the battery during the emergency state. Moreover, in the non-emergency state, the battery is protected from over-charging, which would occur due to a continuous direct connection to the secondary side.

Preferably, the emergency lighting driver additionally comprises a battery charger, which is connected to the secondary side and which is connectable to the battery. The battery charger is adapted to, in the non-emergency state, charge the battery using energy provided from the primary side to the secondary side. This allows for a battery-protective charging of the battery during non-emergency states.

Advantageously, the emergency lighting driver moreover comprises a charge connector, which comprises a Schottky-diode, which is connected between the secondary side and the battery charger. This makes sure that the battery charger only receives energy through this path and not dissipates energy towards the secondary side.

Advantageously, the emergency lighting driver moreover comprises a mains rectifier, which is connected to the primary side and which is connectable to a mains line. The mains rectifier is adapted to rectify a mains voltage, resulting in a primary side supply voltage. This allows for an operation of the emergency lighting driver from AC mains.

Preferably, the emergency lighting driver additionally comprises a power supply rectifier, which is connected between the secondary side and the integrated DALI power supply. It is adapted to rectify a current provided by the secondary side to the integrated DALI power supply. This allows for operating a DC DALI power supply directly from the secondary side.

Advantageously, the emergency lighting driver comprises at least one primary side controller and/or at least one secondary side controller. Only the at least one primary side controller is adapted to control switches on the primary side. Additionally or alternatively, only the at least one secondary side controller is adapted to control switches on the secondary side. This allows for a very strong galvanic separation of the primary side and the secondary side.

Advantageously, the emergency lighting driver additionally comprises a primary side snubber and/or a secondary side snubber. This allows for a prevention of undesired isolations on the primary side and/or on the secondary side.

Advantageously, the primary side snubber comprises a diode and/or at least one resistor and/or a capacitor. Additionally or alternatively, the secondary side snubber comprises a diode and/or at least one resistor and/or a capacitor. This allows for a very simple construction of the primary side snubber and/or the secondary side snubber.

According to a second aspect of the invention, an emergency lighting system is provided. The emergency lighting system comprises a before-described emergency lighting driver and a battery.

An exemplary embodiment of the invention is now further explained with respect to the drawings, in which:
- Fig. 1: shows a general block diagram of a first embodiment of the inventive emergency lighting driver;
- Fig. 2: shows a detailed circuit diagram of a part of a second embodiment of the inventive emergency lighting driver;
- Fig. 3: shows a detailed circuit diagram of a part of a third embodiment of the inventive emergency lighting driver;
- Fig. 4: shows a detailed circuit diagram of a part of a fourth embodiment of the inventive emergency lighting driver;
- Fig. 5: shows a detailed circuit diagram of a part of a fifth embodiment of the inventive emergency lighting driver;
- Fig. 6: shows a detailed circuit diagram of a part of a sixth embodiment of the inventive emergency lighting driver;
- Fig. 7: shows a detailed circuit diagram of a part of a seventh embodiment of the inventive emergency lighting driver.

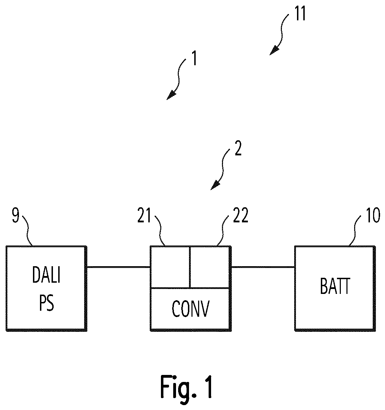

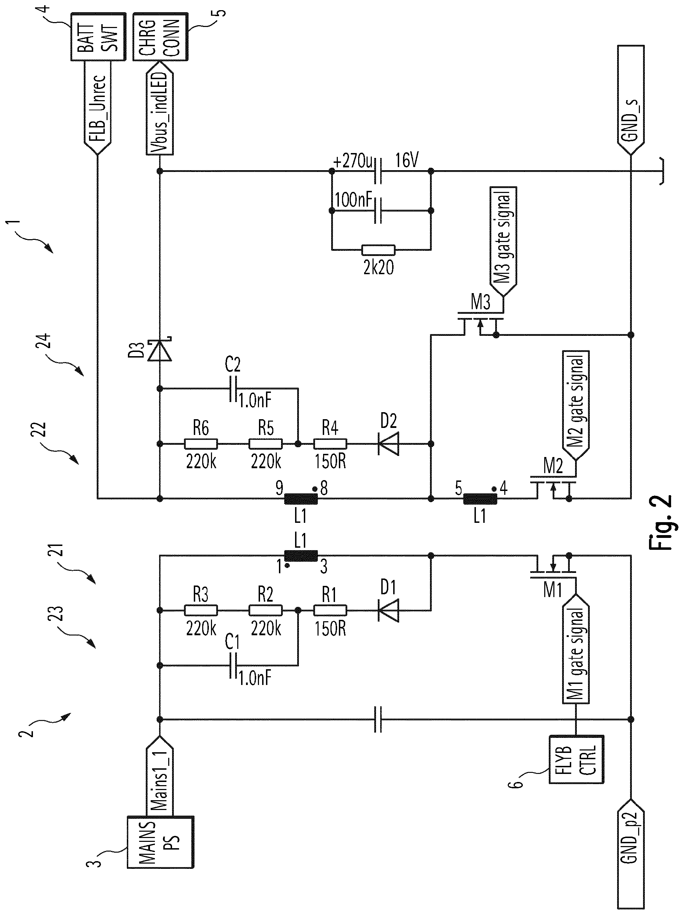

First, we demonstrate along Fig. 1 the most basic construction and function principles of a first embodiment of the inventive emergency lighting driver. Along Fig. 2 - Fig. 7, different parts of different embodiments are shown and described in detail. Similar entities and reference numbers in different figures have been partially omitted.

In Fig. 1, a first embodiment of the inventive emergency lighting driver 1 is shown. The emergency lighting driver 1 comprises a bi-directional flyback converter 2 comprising a primary side 21 and a secondary side 22. Connected to the primary side 21 is an integrated DALI power supply 9.

In a non-emergency state, energy is provided from the primary side 21 to the secondary side 22. An optionally connected lighting means, for example an LED lamp, is operated by the secondary side 22. In an emergency state, energy is provided from the secondary side 22 to the integrated DALI power supply 9, connected to the primary side 21. This energy originates from a battery, optionally connected to the secondary side 22. It is converted by the bi-directional flyback converter 2 and supplied to the integrated DALI power supply 9. The integrated DALI power supply 9 is therefore able to operate the DALI bus even in an emergency state.

Moreover, in Fig. 1, an emergency lighting system 11 comprising the emergency lighting driver 1 and a battery 10, connected to the secondary side 22 of the bi-directional flyback converter 2 is shown.

In Fig. 2, a more detailed second embodiment of the inventive emergency lighting driver 1 is shown. Here, especially the construction of the bi-directional flyback converter 2 is shown on a circuit level, while further components are shown as function blocks. In the following figures, the individual function blocks will be shown on a circuit level.

The bi-directional flyback converter 2 comprises a primary side 21 and a secondary side 22. The primary side 21 is connected to a mains power supply 3 and to a flyback controller 6. The primary side 21 comprises a primary side winding L1₁₃ of a transformer L1, connected in series to a primary side flyback switch M1. The series connection of the primary side winding L1₁₃ of the transformer L1 and the flyback switch M1 are connected between the mains power supply 3 and ground.

In parallel to the primary side winding L1₁₃ of the transformer L1 is a primary side snubber 23, which consists of a series connection of a diode D1 and three resistors R1, R2 and R3. In parallel to the resistors R2 and R3, the primary side snubber 23 moreover comprises a capacitor C1. The primary side snubber 23 removes undesirable isolations on the primary side.

The secondary side 22 is connected to a battery switch 4 and to a charge connector 5. The secondary side 22 comprises a secondary side winding L1₈₉ of the transformer L1 and an auxiliary secondary side winding L1₄₅ connected in series. Moreover, connected in series is a secondary side flyback switch M2. The series connection of the secondary side winding L1₈₉ and the secondary side auxiliary winding L1₄₅ and the secondary side flyback switch are connected between the battery switch 4 and ground. Moreover, a connecting node between the secondary side winding L1₈₉ and the secondary side auxiliary winding L1₄₅ is connected to a secondary side auxiliary winding bypass switch M3, which is connected to ground on its other side.

The secondary side 22 moreover comprises a secondary side snubber 24 connected in parallel to the secondary side winding of the transformer L1. The secondary side snubber 24 consists of a series connection of a diode D2 and three resistors R4, R5 and R6. Connected in parallel to the resistors R5 and R6 is a capacitor C2. The secondary side snubber removes undesirable isolations on the secondary side 22.

The battery switch 4 side connection of the secondary side winding L1₈₉ of the transformer L1 is moreover connected to a Schottky-diode D3, which connects it to the charge connector 5. The Schiottky-diode D3 operates as a rectifier diode.

In a non-emergency state, the mains power supply 3 provides a rectified mains signal to the primary side 21. The flyback controller 6 controls the flyback switch M1 in order to periodically draw power from the mains power supply 3 and store it in the primary side winding L1₁₃ of the transformer L1. On the secondary side 22, the secondary side auxiliary winding flyback switch M2 remains open, while the secondary side auxiliary winding bypass switch M3 remains closed. This bypasses the auxiliary side secondary winding L1₄₅ of the transformer L1.

In this non-emergency state, the energy is transferred from the primary side winding L1₁₃ to the secondary side winding L1₈₉ of the transformer L1 and provide it to optionally connected lighting means via the diode D3. Additionally, via the same connection, the charge connector 5 connected to a battery charger 7 is provided with energy. In this non-emergency state, the battery switch 4 remains open, preventing a direct connection of the battery 10 to the secondary side 22. This prevents the battery 10 from being over-charged and thereby destroyed.

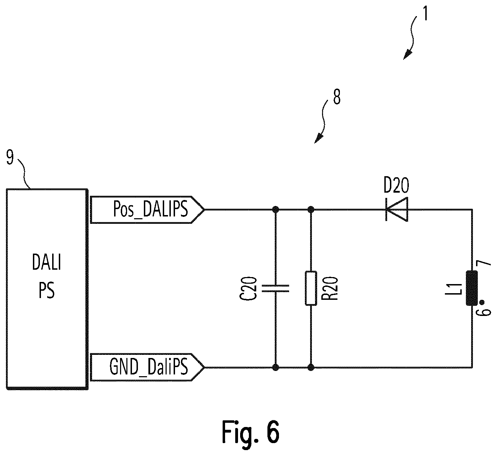

Not shown here, but in Fig. 6 is the integrated DALI power supply 9, which is connected to an auxiliary primary side winding L1₆₇ of the transformer L1. Either this integrated DALI power supply or a further DALI power supply, supply a connected DALI bus during the non-emergency state.

In case of a mains power failure, the mains power supply 3 no longer provides power to the emergency lighting driver 2. When such an emergency state is entered, the battery switch 4 is closed, resulting in a direct connection of a connected battery 10 to the secondary side 22 of the emergency lighting driver 2.

In this emergency state, the secondary side auxiliary winding bypass switch M3 is opened, while the secondary side auxiliary winding flyback switch M2 is operated repeatedly, resulting in a reversed direction flyback converter operation. At the same time, the primary side flyback switch M1 is opened, so that no energy loss towards the mains power supply 3 can occur. Due to the flyback operation of the secondary side auxiliary winding flyback switch M2, energy is repeatedly stored in the secondary side auxiliary winding L1₄₅. This energy is transferred to a primary side auxiliary winding L1₆₇ and then transferred to the integrated DALI power supply 9. This is shown in further detail in Fig. 6.

It should be noted that advantageously the switches on the primary side 21, especially the flyback switch M1, is controlled by a separate controller from a controller controlling the switches on the secondary side, especially the switches M2, M3, resulting in a proper galvanic separation between the primary side 21 and the secondary side 22.

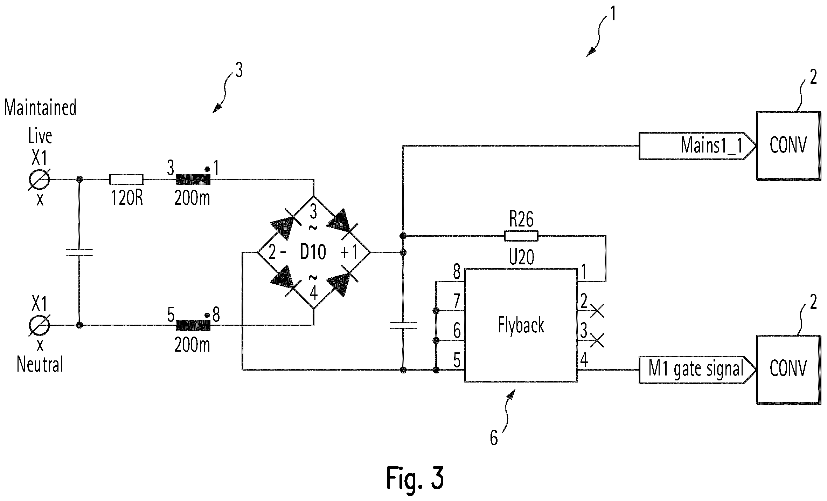

In Fig. 3, details of a third embodiment of the inventive emergency lighting driver 1 are shown. Here, especially details of the mains power supply 3 and the flyback controller 6, which is a primary side controller, are shown.

The bi-directional flyback converter 2 is connected to a mains power supply 3. The mains power supply 3 consists of a mains connection connected to a parallel capacitor, a serial resistor 120R and serial fuses. Moreover, the mains power supply 3 comprises a number of rectifier diodes and a smoothing capacitor. The mains power supply 3 is provided with an AC mains voltage and rectifies and smooths this AC voltage to a mains DC voltage. This mains DC voltage is provided to the bi-directional flyback converter 2 and to the flyback controller 6, which again is connected to the primary side flyback switch M1 of the bi-directional flyback converter 2.

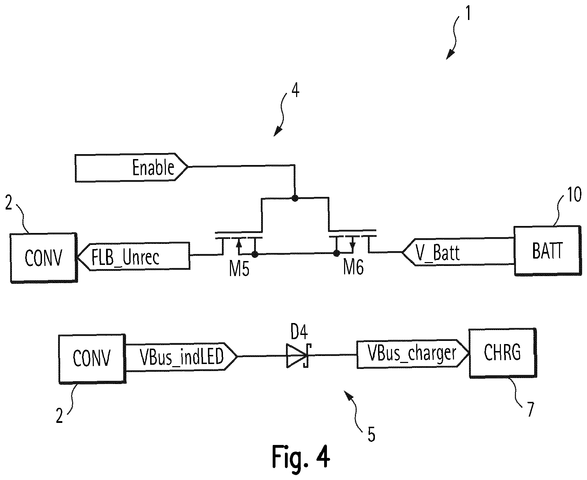

In Fig. 4, details of a fourth embodiment of the inventive emergency lighting driver 1 are shown. Especially here, the battery switch 4 and the charge connector 5 are shown in detail.

The battery switch 4 is connected between the bi-directional flyback converter 2 and a battery 10. The battery switch 4 comprises two serially connected transistors M5, M6, which are activated by an enable signal. The battery switch 4 is adapted to connect the secondary side 22 of the bi-directional flyback converter 2 to the battery 10 in the emergency state, and disconnect the same during the non-emergency state, when triggered by the enable signal. This signal is advantageously provided by a controller not displayed here.

The charge connector 5 is connected between the secondary side of the bi-directional flyback converter 2 and a battery charger 7. The charge connector 5 comprises a Schottky-diode D4, which assures that energy is only transferred from the secondary side of the bi-directional flyback converter 2 to the battery charger 7 but not in the reverse direction. Additionally, a threshold may be implemented, which needs to be surpassed for energy to be transferred from the secondary side 22 to the battery charger 7. Such a threshold could be implemented by measuring the voltage at the battery charger side, using for example an ADC input channel of a microcontroller. Also a determination if mains voltage is present or not can be performed in this manner..

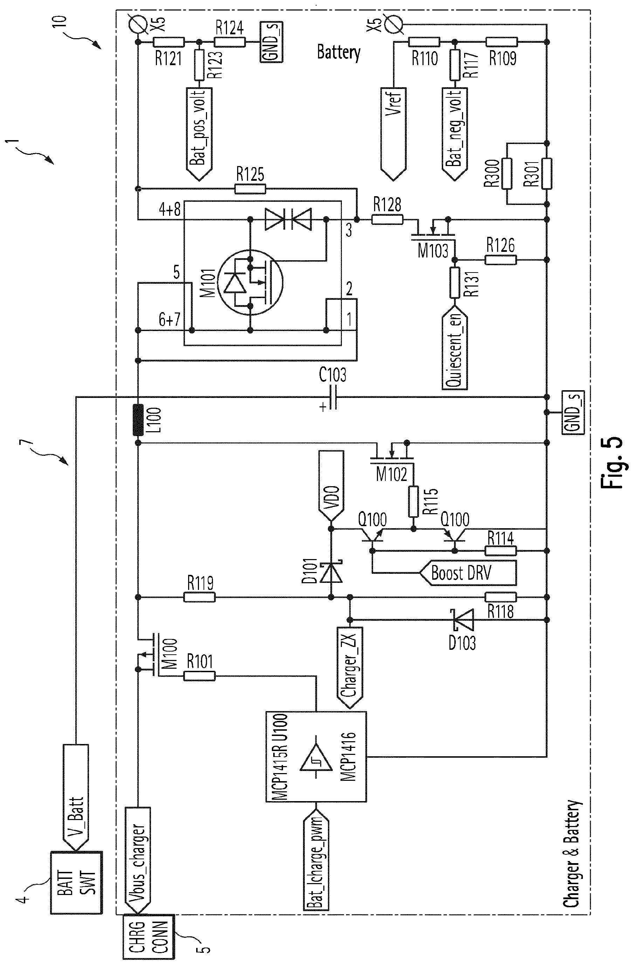

In Fig. 5, a further detail of a fifth embodiment of the inventive emergency lighting driver 1 is shown. Here, details of the battery charger 7 and the battery 10, which is not part of the emergency lighting driver, are shown. In the left part of Fig. 5, the battery charger 7 is displayed. It is connected to the charge connector 5 and through the charge connector 5 to the secondary side 22 of the bi-directional flyback converter 2.

The battery charger 7 receives energy from secondary side 22 of the bi-directional flyback converter 2 in the non-emergency state and charges the battery 10 using this energy. In order to do so, it generates a charging signal, which is then provided to the battery 10. This assures that the battery is not over-charged or otherwise destroyed. The battery charger 7 is a conventional battery charger, therefore, further elaborations regarding details of its construction are omitted here.

The battery 10 is moreover connected to the battery switch 4, through which it can be directly connected to the secondary side 22 of the bi-directional flyback converter 2, bypassing the battery charger 7. This is done during the emergency state. During the emergency state, the battery voltage is therefore directly applied to the secondary side 22 of the bi-directional flyback converter 2.

In Fig. 6, a further detail of a sixth embodiment of the inventive emergency lighting driver 1 is shown. Here, a power supply rectifier 8, connected to the integrated DALI power supply 9 is shown.

The power supply rectifier 8 consists of a rectifying diode D20 connected in series to a primary side auxiliary winding L1₆₇ of the transformer L1, and a capacitor C20 and a resistor R20, connected in parallel to the series connection of the primary side auxiliary winding L1₆₇ and the rectifying diode D20. Together, the rectifying diode D20, the capacitor C20 and the resistor R20 form the power supply rectifier 8.

In the emergency state, energy is provided to the primary side auxiliary winding L1₆₇ by the secondary side auxiliary winding L1₄₅ due to the flyback switching operation of the secondary side auxiliary winding flyback switch M2. The received energy is rectified by the power supply rectifier 8 and provided to the integrated DALI power supply 9, allowing the integrated DALI power supply 9 to operate even in the emergency state, when mains power has failed.

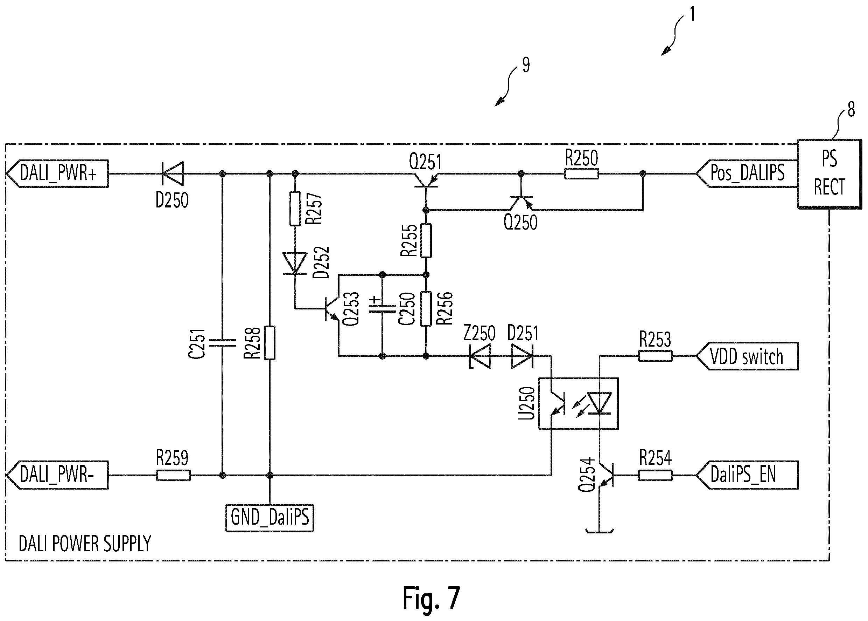

In Fig. 7, a further detail of an embodiment of the inventive emergency lighting driver 1 is shown. Especially here, the integrated DALI power supply 9 is shown on a circuit level. The integrated DALI power supply is connected to the power supply rectifier 8. The integrated DALI power supply 9 is a conventional DALI bus power supply, generating a stable supply for the DALI bus from a DC voltage provided by the power supply rectifier 8. Therefore, further elaborations regarding the detailed construction of the integrated DALI power supply 9 are omitted here.

The invention is not limited to the examples and especially not to the DALI standard. The characteristics of the exemplary embodiments can be used in any advantageous combination.

## Claims

1. Emergency lighting driver (1), comprising:
- a bi-directional flyback converter (2), comprising a primary side (21) and a secondary side (22), and
- an integrated DALI power supply (9),
wherein the bi-directional flyback converter (2) is adapted to:
- in a non-emergency state, provide energy from the primary side (21) to the secondary side (22), and
- in an emergency state, provide energy from the secondary side (22) to the integrated DALI power supply (9) connected to the primary side (21).

2. Emergency lighting driver (1), according to claim 1,
wherein the emergency state is defined by a loss of mains power, and
wherein a non-emergency state is defined by an availability of mains power.

3. Emergency lighting driver (1), according to claim 1 or 2,
wherein the bi-directional flyback converter (2) comprises a transformer (L1),
wherein the transformer (L1), comprising on the secondary side (22):
- a secondary side winding (L1₈₉), and
- an auxiliary secondary side winding (L1₄₅), connected in series to the secondary side winding (L1₈₉),
wherein the secondary side (22) of the bi-directional flyback converter (2) comprises:
- an auxiliary secondary side winding flyback switch (M2), connected between the auxiliary secondary side winding (L1₄₅) and ground, and
- an auxiliary secondary side winding bypass switch (M3), connected between ground a connection node between the secondary side winding (L1₈₉) and the auxiliary secondary side winding (L1₄₅).

4. Emergency lighting driver (1), according to claim 3, wherein, in the non-emergency state, the emergency lighting driver (1) is adapted to:
- open the auxiliary secondary side winding flyback switch (M2), and
- close the auxiliary secondary side winding bypass switch (M3), and/or
wherein, in the emergency state, the emergency lighting driver (1) is adapted to:
- switch the auxiliary secondary side winding flyback switch (M2) repeatedly in a flyback operation, and
- open the auxiliary secondary side winding bypass switch (M3) .

5. Emergency lighting driver (1), according to claim 4,
wherein the transformer (L1) comprises on the primary side (21), an auxiliary primary side winding (L1₆₇), connected to the integrated DALI power supply (9),
wherein in the emergency state, the emergency lighting driver (1) is adapted to transfer energy from the auxiliary secondary side winding (L1₄₅) to the auxiliary primary side winding (L1₆₇).

6. Emergency lighting driver (1), according to any of the claims 1 to 5, comprising a battery switch (4), connected to the secondary side (22), connectable to a battery (10), wherein the emergency lighting driver (1) is adapted to:
- in the emergency state, close the battery switch (4), directly connecting the battery (10) to the secondary side (22), and
- in the non-emergency state, open the battery switch (4), opening the direct connection of the battery (10) to the secondary side (22).

7. Emergency lighting driver (1), according to any of the claims 1 to 6, comprising a battery charger (7), connected to the secondary side (22), connectable to a battery (10), wherein the battery charger (7) is adapted to, in the non-emergency state, charge the battery (10), using energy provided from the primary side (21) to the secondary side (22) .

8. Emergency lighting driver (1), according to claim 7, comprising a charge connector (5), comprising a Schottky-diode (D4), connected between the secondary side (22) and the battery charger (7).

9. Emergency lighting driver (1), according to any of the claims 1 to 8, comprising a mains rectifier, connected to the primary side (21), and connectable to a mains line, wherein the mains rectifier is adapted to rectify a mains voltage, resulting in a primary side supply voltage.

10. Emergency lighting driver (1), according to any of the claims 1 to 9, comprising a power supply rectifier (8) connected between the secondary side (22) and the integrated DALI power supply (9), adapted to rectify a current provided by the secondary side (22) to the integrated DALI power supply (9).

11. Emergency lighting driver (1), according to any of the claims 1 to 10, comprising:
- at least one primary side controller (6), and
- at least one secondary side controller,
wherein only the at one primary side controller (6) is adapted to control switches (M1) on the primary side, and/or
wherein only the at one secondary side controller is adapted to control switches on the secondary side (22).

12. Emergency lighting driver (1), according to any of the claims 1 to 11, comprising:
- a primary side snubber (23), and/or
- a secondary side snubber (24).

13. Emergency lighting driver (1), according to claim 12,
wherein the a primary side snubber (23) comprises a diode (D1) and/or at least one resistor (R1, R2, R3) and/or a capacitor (C1), and/or
wherein the a secondary side snubber (24) comprises a diode (D2) and/or at least one resistor (R4, R5, R6) and/or a capacitor (C2).

14. Emergency lighting system (11), comprising an emergency lighting driver (1) according to any of the preceding claims and a battery (10).
